# EUROPÄISCHE PATENTSCHRIFT

(11) **EP 2 001 627 B1**
(45) Veröffentlichungstag und Bekanntmachung des Hinweises auf die Patenterteilung: **08.10.2014**
(21) Anmeldenummer: 07710518.7
(22) Anmeldetag: 15.03.2007
(51) Int. Cl.: B23D 31/00, B23D 35/00, E02F 3/96, E02F 9/28

(54) **ABBRUCHZANGE**
DEMOLITION TOOL
PINCE DE DÉMOLITION

(30) Priorität: 23.03.2006 AT 22706 U
(43) Veröffentlichungstag der Anmeldung: 17.12.2008
(73) Patentinhaber: WIMMER, Alois, 5322 Hof bei Salzburg (AT)
(72) Erfinder: WIMMER, Alois, 5322 Hof bei Salzburg (AT)
(74) Vertreter: Itze, Peter
(86) Internationale Anmeldenummer: PCT/AT2007/000128
(87) Internationale Veröffentlichungsnummer: WO 2007/106919

(56) Entgegenhaltungen:
- EP-A- 1 582 280
- EP-A1- 1 113 111
- WO-A1-00/54916
- US-A- 5 474 242
- US-A- 5 533 682
- US-A- 5 890 667
- US-B1- 6 926 217

## Beschreibung

Die Erfindung bezieht sich auf eine Abbruchzange, welche einen ersten und einen zweiten Zangenbacken aufweist, die über ein Gelenk schwenkbar miteinander verbunden sind, wobei die Abbruchzange auf beiden Zangenbacken an deren einander zugewandten Seiten jeweils mehrere Brechzähne, zum Brechen von Abbruchmaterial, zum Beispiel Beton, Mauerwerk oder dergleichen, und beim Schließen der Zange ineinander greifende Schneideteile zum Schneiden von Beton-Armierungen, Holz, etc. aufweist, wobei die Schneideteile austauschbar an den Zangenbacken angebracht sind.

Abbruchzangen werden beim Abbruch von Beton oder Mauerwerk, Schneiden von Betonarmierungen sowie zum Separieren von Abbruchmaterial verwendet. Dabei ist nicht nur eine hohe Abbruchgeschwindigkeit von Interesse, sondern auch eine Verringerung von Lärm und Staubbelastungen, die im Zuge eines Abbruches unvermeidbar sind. Abbruchzangen ermöglichen auch eine verhältnismäßig einfache Trennung von Betonresten und Baustahl, was eine wirtschaftliche Vermarktung des so gewonnenen Recyclingmaterials ermöglicht. Meist sind Abbruchzangen am Ausleger eines Hydraulikbaggers drehbar und schwenkbar gelagert, und können so in die gewünschte Arbeitsposition gebracht werden. Die Kraftübertragung erfolgt im Allgemeinen durch Hydraulikzylinder.

Abbruchzangen besitzen vielfach auch auswechselbare Betonbrechzähne, meist im vorderen Zangenbereich, die den Beton und Mauermaterialanteil zermalmen und so die Betonarmierungen, aber auch Stahlträger, Rohre oder andere Profile freilegen. Diese können dann von den Schermessern, die meist im hinteren Bereich der Zange angeordnet sind, durchtrennt werden. Dadurch entfällt das gefährliche und umweltbelastende Durchtrennen der Metallteile mit dem Schneidbrenner, mit Trennscheiben oder dergleichen. Auch die Schermesser sind üblicherweise auswechselbar und entweder mit eigenen Trägerschenkeln fix verschraubt oder einzeln auswechselbar montiert.

Nachteil dieser Ausführungen ist, dass sich diese einzelnen Teile durch die hohen Kräfte beim Schneiden lösen können bzw. die Schraubenverbindungen der Krafteinwirkung oft nicht Stand halten. Auch kommt es bei nicht auswechselbaren Teilen der Zange zu einem hohen Verschleiß, insbesondere der Schneiden zum Durchtrennen der Metallteile, da diese ungeschützt den Materialkräften ausgesetzt sind, bzw. werden die Metallschneiden durch Kontakt mit Beton aufgrund der darin enthaltenen massiven Steine vielfach rasch stumpf.

Wie die Praxis gezeigt hat, kommt es bei Abbruchzangen mit ineinandergreifenden Zangenbacken vor allem am kleineren, innenliegenden Zangenbacken durch Drehbewegungen des Zangenkopfes beim Abbruchvorgang zu hohen Zugkräften auf die Schraubverbindung. Auch sind Teile, die nicht direkt an der Abbrucharbeit beteiligt sind, wie Sicherungselemente. Messersitz, Schraubverbindungen, etc., oft einem erheblichen Verschleiß ausgesetzt, da sie nur ungenügend vor dem Abbruchmaterial geschützt sind.

Bei vielen bekannten Abbruchzangen sind die Verschleißteile nur schwierig auswechselbar, was wiederum zu langen und teueren Stehzeiten führt, beziehungsweise überhaupt zu einem Tausch der gesamten Zange führen kann.

Im Stand der Technik sind verschiedene Ausführungsformen von Abbruchzangen bekannt. EP 1 113 111 beschreibt eine Betonbrechzange, die an beiden Zangenbacken mehrere auswechselbare Schneideelemente aufweist. Die Schneideelemente sind dabei in Aufnahmetaschen eingesetzt und lösbar darin festgehalten. Dabei ist vorgesehen, die Betonbrechzähne auch als Halteteile für die Schneideelemente zu verwenden. Die Betonbrechzähne werden dazu an die jeweilige Zangenbacke mittels Schraubenverbindungen befestigt und halten die Schneideelemente an deren Stirnflächen mit einer Anschlagfläche. Die Schneideelemente, von welchen je Backenseite mehrere vorgesehen sind, sind einzeln in die jeweiligen Aufnahmetaschen ohne irgendwelche Befestigungselemente eingesetzt, sodass die Schraubverbindungen auch die von den Schneideelementen auf die Zangenbacken ausgeübten Kräfte zumindest teilweise aufnehmen müssen.

Aus der US 5,533,682 ist eine Abbruchzange bekannt, deren Backen scherenartig ausgebildet sind, wobei im Drehpunkt nahen Bereich auswechselbare Schneiden angeordnet sind.

Im Bereich der Spitzen der Backen sind Betonbrechzähne vorgesehen, die abwechselnd mit den Schneiden einsetzbar sind.

Die EP 1 582 280 A1 offenbart eine Abbruchzange, bei welcher eine Zangenbacke in eine Ausnehmung der anderen Zangenbacke hineinschwenkbar ist, wobei die Kanten der hineinschwenkbaren Backe durch einen auswechselbaren Schneidblock und die die Ausnehmung der anderen Backe umschließenden Kanten durch auswechselbare Schneidleisten gebildet sind. Betonmahlzähne sind nicht vorhanden.

US 5,474,242 zeigt eine Abbruchzange, bei welcher an den Zangenbacken im Bereich der gegenseitigen Schwenkachse Schneidkanten für das Abschneiden von Armierungsstählen und im Bereich der Backenspitze Betonmahlzähne vorgesehen sind. Die Betonmahlzähne sind durch Einsetzbalken gebildet, welche mittels einer Einhängenase und einem Fixierungsbolzen am Backen gesichert sind. Die Einsetzbalken greifen dabei formschlüssig in je eine Aufnahmerinne, an deren Längsrändern sich der Einsetzbalken über Längsschultern abstützt. Die Fixierungsbolzen verlaufen parallel zur Schwenkachse und dienen lediglich der Festlegung des Einsetzbalkens.

Der vorliegenden Erfindung liegt die Aufgabe zugrunde, eine Abbruchzange zu schaffen, deren Verschleißteile, in einfacher Weise und schnell ausgewechselt werden können, um lange Stehzeiten zu vermeiden. Weiters soll die Erfindung eine höhere Sicherheit gegen ein ungewolltes Lösen der Verschleißteile im Einsatz bieten und einen höheren Schutz der nicht auswechselbaren Teile der Zange gewährleisten, als dies nach dem Stand der Technik derzeit möglich ist.

Erfindungsgemäß wird diese Aufgabe durch die Merkmale des Anspruchs 1 gelöst. Dadurch wird einerseits mittels der Bolzen die Fixierung des Messerelements bewirkt und anderseits werden Mahlzähne geschaffen, die das zwischen den Schneiden befindliche Betonmaterial zerkleinert bzw. von den Armierungen wegbricht und damit wird der Schneidevorgang in Bezug auf die Armierung erleichtert. Außerdem ermöglicht diese Ausführung ein schnelles Auswechseln der Schneideelemente, die gemeinsam auf einem Messerelement angebracht sind. Das Messerelement deckt dabei den Grundteil des Schenkels ab, wodurch der Messersitz im Einsatz komplett geschützt ist. Auch bietet die erfindungsgemäße Ausbildung eine vorteilhafte Anordnung der Teile der Abbruchzange, die eine geringere Abnutzung sowohl der Verschleißteile, als auch der anderen Teile der Zange ermöglicht. Die Drehbarkeit der Bolzen ist dabei dann vorteilhaft, wenn die oberen Bolzenenden gleichzeitig als zusätzliche Betonmahlzähne ausgebildet sind. Da Brech-und Schnittkräfte an den Brechspitzen in verschiedenste Kraftrichtungen wirken können, können sich die Brechzähne bei dieser Befestigungsform ausweichend drehen und verringern damit die an die Halterung weitergegebenen Kräfte. Durch die drehbare Fixierung der Bolzen können diese daher höhere Belastungen aufnehmen, als dies bei Betonmahlzähnen mit einer festen Verschraubung möglich wäre.

In einer vorteilhaften Ausführung können die Bolzen durch Sicherungselemente gegen ein Herausfallen aus dem Zangenbacken gesichert sein. Die Sicherungen greifen dabei in den der Spitze gegenüberliegenden Bolzenbereich ein. Diese Form der Sicherung ermöglicht gegebenenfalls die Drehbarkeit der Bolzen und schützt die Sicherungselemente vor Beschädigungen durch Abbruchmaterial, da die Sicherungselemente auf der der Arbeitsseite des Messerelements abgewandten Seite geschützt angeordnet sind.

In einer weiteren vorteilhaften Ausführung können die Sicherungselemente durch am Zangenbacken lösbar befestigbare Sicherungsplatten gebildet sein. Je Bolzen sind diese mit den Randbereichen einer vorzugsweise U-förmigen Ausnehmung mit einer im unteren Bolzenbereich vorgesehenen Ringnut im Eingriff. Diese Form der Sicherung ist schnell und einfach in der Montage, ermöglicht dadurch ein schnelles Auswechseln der Verschleißteile uns ist auch besonders unempfindlich gegenüber äußeren Einflüssen.

In einer bevorzugten Ausführungsform können die Montagedurchgangsöffnungen als Bohrungen ausgebildet sein.

In einer weiteren vorteilhaften Ausgestaltung weisen die Montagebohrungen in dem Verbindungssteg des Messerteils einen größeren Durchmesser auf, als die entsprechenden Montagebohrungen in der Zangenbacke. Die Montagebohrungen in dem Verbindungssteg sind dabei zu den entsprechenden Montagebohrungen in der Zangenbacke koaxial.

Die Bolzen können dabei in einem nahe der Spitze liegendem Bolzenbereich einen Durchmesser aufweisen, der dem Durchmesser der Montagebohrungen des Messerteils entspricht und in einem der Spitze gegenüberliegenden Bolzenbereich einen Durchmesser aufweisen, der dem Durchmesser der Montagebohrungen des Zangenbackens entspricht.

In einer vorteilhaften Ausgestaltung kann der Übergang zwischen Bolzenteilen unterschiedlichen Durchmessers als quer zur Bolzenachse verlaufende Schulter ausgebildet sein, die eine Abstützfläche für die Betonmahlzähne bildet. Diese in einer Querebene zur Bolzenlängsachse ausgerichtete Schulter überträgt die auf die Betonmahlzähne einwirkenden Kräfte direkt auf die dafür vorgesehenen Auflagerflächen auf der Zangenbacke. Es werden also keine Kräfte, die bei der Arbeit der Betonmahlzähne frei werden, auf den Messerteil übertragen, der von den Bolzen nur gegen ein Verschieben und damit gegen Herausfallen oder -kippen aus der Aufnahmeausnehmung gesichert wird. Der Großteil der auf die Schneiden des Messerteils einwirkenden Kräfte wird über die formschlüssige Verbindung vom Messerteil auf den Zangenbacken übertragen, ohne die Befestigungselemente stark zu belasten.

Durch das Befestigen des Messerelements mit Hilfe von als Mahlzähne ausgebildeten Bolzens, den formschlüssigen Sitz und die einteilige Bauweise des Messerelements können auch wesentlich höhere Querbelastungen aufgenommen werden, als dies bei den im Stand der Technik bekannten Ausführungen möglich ist.

In den beigefügten Zeichnungen ist ein Ausführungsbeispiel des Erfindungsgegenstandes dargestellt.
Fig. 1 ist eine Perspektivische Ansicht eines Anbaugerätes für einen Baggerarm mit einer Abbruchzange entsprechend der vorliegenden Erfindung
Fig. 2 ist eine auseinandergezogene Darstellung der Abbruchzange mit dem Messerelement und den als Betonbrechzähne ausgebildeten Bolzen.
Fig. 3 ist eine Seitenansicht der Abbruchzange.
Fig. 4 ist eine Schnittansicht der Abbruchzange nach Linie IV-IV der Fig. 3.
Fig. 5 ist eine Ansicht von Unten, die die Sicherungselemente der Bolzen zeigt.
Fig. 6 zeigt Abbruchzange in Vorderansicht.
Fig. 7 ist eine Schnittansicht der Abbruchzangen nach Linie VII-VII der Fig. 6.
Fig. 8 gibt eine Seitenansicht von der der Fig. 3 gegenüberliegenden Seite gesehen wieder.

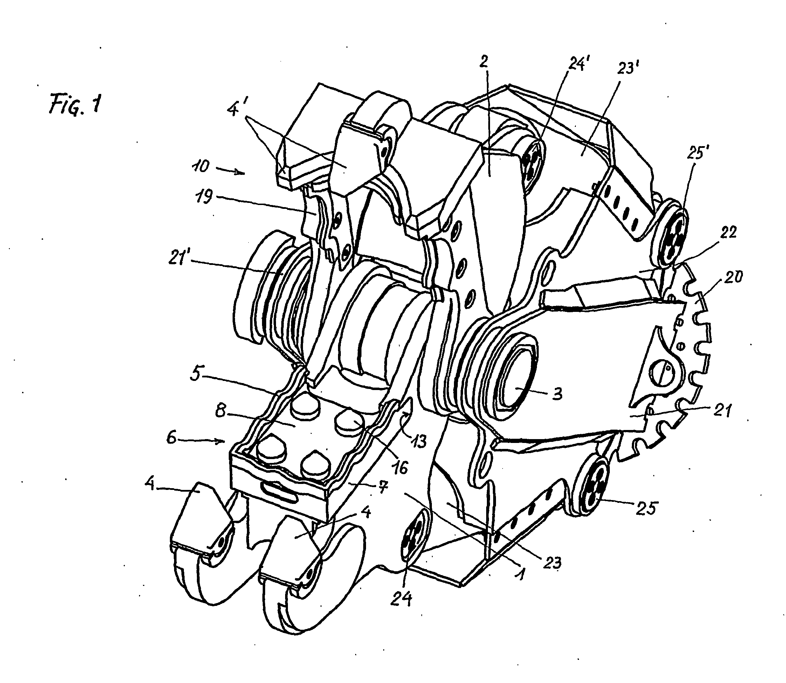

Figur 1 zeigt ein Anbaugerät zum Anbau an einen Baggerarm, welches eine Abbruchzange 10 entsprechend einer bevorzugten Ausführungsform der vorliegenden Erfindung beinhaltet Das Anbaugerät kann dabei mit einem Anschlusskranz 20 an eine nicht gezeigte entsprechende Montagevorrichtung am Ende eines Baggerarmes befestigt werden. Am Ende des Baggerarmes kann sich weiters eine nicht gezeigte Dreh- und Schwenkvorrichtung befinden, mit der das Anbaugerät mit der Abbruchzange um die Längsachse gedreht und um eine oder mehrere Querachsen geschwenkt werden kann. Dadurch lässt sich die Abbruchzange in eine gewünschte Arbeitsposition bewegen.

An dem Anschlusskranz 20 nach vorne abstehend sind zwei Seitenwände 21, 21' befestigt die mit einem nach oben und unten abstehenden Schutzgehäuse 22, 22' verbunden sind. Das Schutzgehäuse ist nach vorne hin offen. Durch diese Öffnungen ragen ein erster Hydraulikkolben 23 und ein zweiter Hydraulikkolben 23', die als Antrieb für die Abbruchzange 10 dienen. Die Abbruchzange 10 weist einen ersten Zangenbacken 1 und einen zweiten Zangenbacken 2 auf, die über ein Gelenk 3 miteinander schwenkbar verbunden sind. Das Gelenk ist weiters im vorderen Bereich des Schutzgehäuses 22, 22' und der Seitenwände 21, 21' an diesen befestigt. Der erste Zangenbacken 1 ist über ein an der dem zweiten Zangenbacken 2 abgewandten Seite angebrachtes Antriebsgelenk 24 mit einem vorderen Ende des Hydraulikkolbens 23 schwenkbar verbunden, das hintere Ende des Hydraulikkolbens 23 ist mit dem Schutzgehäuse über ein am Schutzgehäuse vorgesehenes Drehgelenk 25 schwenkbar verbunden.

In gleicher Weise wie der erste Zangenbacken 1 ist auf der gegenüberliegenden Seite auch der zweite Zangenbacken 2 über ein Antriebsgelenk 24', einen Hydraulikkolben 23' und ein Drehgelenk 25' mit dem Schutzgehäuse 22 verbunden. Ein Ausfahren der Hydraulikzylinder 23, 23' bewirkt somit ein Schließen der Abbruchzange, ein Einfahren öffnet diese.

An der dem zweiten Zangenbacken 2 zugewandten Seite des ersten Zangenbackens 1 ist ein auswechselbares Messerelement 6 in einer Aufnahmeausnehmung 13 formschlüssig angebracht, welches einen Querteil und zwei in Richtung der zweiten Zangenbacke 2 vorragende Seitenteile 7 aufweist, welche durch einen dazwischenliegenden Verbindungssteg 8 miteinander starr verbunden sind. Aus dem Verbindungssteg 8 ragen vier Betonmahlzähne 16. Die Betonmahlzähne bilden gleichzeitig die Bolzenbefestigung des Messerteils, wie in den folgenden Figuren noch genauer beschrieben wird, und sind um Ihre Achse drehbar festgelegt. An der dem zweiten Zangenbacken zugewandten Seite der Seitenteile 7 des Messerteils 6 sind Schneideteile 5 angeordnet.

Der erste Zangenbacken weist weiters an dessen dem Gelenk 3 entfernten Ende zwei dem zweiten Zangenbacken 2 zugewandte Brechzähne 4 auf, die auswechselbar an dem Zangenbacke befestigt sind. Diesen gegenüber befinden sich auf dem zweiten Zangenbacken 2 drei weitere Brechzähne 4', wobei bei einem Schließen der Zangenbacken die gegenüberliegenden Brechzähne 4, 4' in Form einer Verzahnung ineinandergreifen. Die ineinandergreifenden Brechzähne dienen dabei vor allem dem Brechen von mineralischem Abbruchmaterial, wie zum Beispiel Beton, Mauerwerk oder dergleichen. Auch kann dieser vordere Zangenbereich zum Greifen und Manipulieren eingesetzt werden.

Der zweite Zangenbacken 2 weist zwei den Schneideteilen 5 des ersten Zangenbackens 1 zugewandte Schneideteile 19 auf, welche an dem zweiten Zangenbacken 2 auswechselbar montiert sind. Der Innenabstand der Schneideteile 19 des zweiten Zangenbackens entspricht im Wesentlichen dem Außenabstand der auf dem Messerelement 6 angeordneten Schneideteile 5 des ersten Zangenbackens 1. Dadurch können sich beim Schließen der Zange die Schneideteile aneinander vorbeibewegen, wobei die Schneideteile 5 des Messerelements 6 innerhalb der Scheideteile 19 des zweiten Zangenbackens 2 zu liegen kommen. Die so beim Schließen der Zange entstehende Scherbewegung der ineinandergreifenden Schneideteile 5 und 19 dient dem Schneiden von Beton-Armierungen, Holz, Rohren, Profilen, Stahlträgem oder dergleichen.

Bei einer Verwendung bei Abbrucharbeiten wird das Anbaugerät mit der Abbruchzange am Ende eines Baggerarmes befestigt und die Hydraulikzylinder an die Hydraulik des Baggers angeschlossen. Je nach Einsatzzweck sind dabei viele verschiedene Kombinationen von Baggern und Baggerarmen möglich, diese dienen lediglich dazu, das Anbaugerät mit der Abbruchzange in eine für die jeweilige Arbeit notwendige Position zu bewegen. Meist wird die Abbruchzange verwendet, um Mauern und Decken aus stahlbewährtem Beton abzureissen. Dabei wird die Abbruchzange im geöffneten Zustand an die Einsatzstelle bewegt, bis sich ein abzubrechendes Stück Betonmauer zwischen den Zangenbacken befindet. Über die Hydraulikzylinder werden nun die Zangenbacken aufeinander zu bewegt, wodurch als Erstes die Brechzähne 4, 4' mit der Betonmauer in Berührung kommen und in weiterer Folge den Beton zunächst grob zerbrechen. Ein großer Teil des Betons fällt dabei in Stücken zu Boden, jedoch werden Betonbrocken auch an den Armierungen haften bleiben.

Durch Drehen, Schwenken oder Ziehen der Abbruchzange kann der Lenker des Baggers den Beton weiter zerkleinern, bevor die Armierungen geschnitten werden können. Dabei wird die Abbruchzange so bewegt, dass die Armierungen, oder anderes Material, das geschnitten werden soll, in der Zange zwischen den Schneideteilen 5, 19 zu liegen kommt. Dann wird die Zange noch weiter geschlossen, bis die Schneideteile 5, 19 miteinander in Eingriff gelangen und durch die Scherwirkung die Armierungen durchtrennen.

Durch die Betonmahlzähne 16, die vom Verbindungssteg 8 des Messerelements 6 innerhalb der Schneideteile 5 des Messerelements 6 vorragen, und die im Allgemeinen weiter vorragen, als die Schneiden 5, wird restliches Betonmaterial, wie Betonbrocken, die an den Armierungen anhaften, vor dem Schneidevorgang nochmals zerkleinert, bzw. von den Armierungen weggebrochen, wodurch die Abnutzung der Schneiden, zum Beispiel durch massive Steine im verbliebenen Beton, weiter vermindert wird.

Die Betonmahlzähne können dabei ähnlich arbeiten wie Fräsmeißel in Gesteinsfräsen, die ebenfalls drehbar gelagert sind. Diese Befestigungsform ist besonders günstig, da auf die Betonmahlzähne 16 auftreffende Brech- und Schnittkräfte in verschiedenste Kraftrichtungen wirken können und die drehbare Befestigung es der Brechspitze erlaubt, eine ausweichende Drehbewegung durchzuführen.

Bei Abbrucharbeiten ist es häufig notwendig, am Abrissobjekt festhängende Teile mit der Abbruchzange zu ziehen, oder diese durch eine drehende Bewegung des Zangenkopfes zu bewegen. Dabei kommt es zu hohen Querbelastungen an den Schneideteilen, die auch zu einem Materialversagen der Schneideteile oder von deren Befestigungen führen können. Wie die Praxis gezeigt hat, ist dies besonders bei großen Öffnungsweiten der Zange und dann vor allem bei den innenliegenden Schneideteilen der Fall (In Figur 1 wären das die Schneideteile 5 der ersten Zangenbacke 1, die sich bei geschlossener Zangenposition innerhalb der Schneideteile 19 der zweiten Zangenbacke befinden). Vor allem durch die einteilige Bauweise des Messerelements 6, dessen formschlüssigen Sitz und der Befestigung mittels Bolzen können mit der Abbruchzange der vorliegenden Erfindung besonders hohe Querkräfte aufgenommen werden.

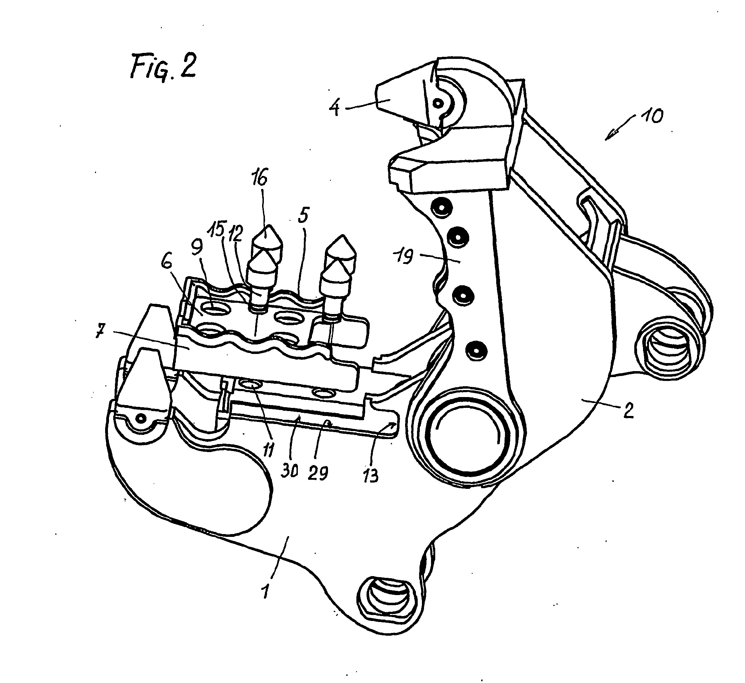

Figur 2 zeigt die miteinander verbundenen Backen der Abbruchzange aus Figur 1 ohne Gehäuse und Aufbauteile in einer auseinandergezogenen Darstellung wobei vor allem die Befestigung des Messerelements an dem ersten Zangenbacken verdeutlicht werden soll.

Das Messerelement 6 ist an dem ersten Zangenbacken 1 befestigt, wobei die Seitenteile 7 des Messerelements 6 auf eine Aufnahmeausnehmung 13 des ersten Zangenbackens 1 formschlüssig aufgeschoben ist, sodass das Messerelement nur gegen ein Herausziehen aus der Aufnahmeausnehmung gesichert werden muss und in alle anderen Richtungen durch die formschlüssige Verbindung fixiert ist. Die inneren Flächen der Seitenteile 7 des Messerelements 6 liegen dabei an je einer nach außen weisenden Seitenfläche 30 des Backens 1 an, wodurch das Messerelement auch in seitlicher Richtung fixiert ist. Die Seitenteile 7 des Messerelements 6 liegen weiters mit ihrer unteren Stirnfläche an einer Stirnfläche 29 der Aufnahmeausnehmung 13 auf. Dadurch werden die an den Schneideteilen 5 auftretenden Schneidekräfte an den Zangenbacken 7 direkt weitergegeben, und von diesem aufgenommen, ohne die Befestigungen damit zu belasten.

Der Verbindungssteg 8 des Messerelements weist, im vorliegenden Falle, vier Montagebohrungen 9 auf, die mit kleineren Montagebohrungen 11 in dem ersten Zangenbacken 1 koaxial sind, wenn das Messerelement auf die Aufnahmeausnehmung 13 aufgeschobenen ist. Dadurch entstehen vorliegend vier Durchlässe durch das Messerelement 6 und den ersten Zangenbacken 1, die zur Aufnahme der Bolzen 12 geeignet sind.

Die Bolzen 12 weisen ein freies Ende und ein der Spitze gegenüberliegendes Sicherungsende auf, wobei an dem Sicherungsende eine um die Bolzen verlaufende Ringnut 15 vorgesehen ist. Diese dient zum Sichern der Bolzen mit einem Sicherungselement 14. Im Bereich des Sicherungsendes weisen die Bolzen einen Durchmesser auf, der dem der Montagebohrung 11 des ersten Zangenbackens 1 entspricht. Das freie Ende der Bolzens ist als konisch zulaufender Betonmahlzahn 16 ausgebildet. Der Durchmesser zwischen dem Betonmahlende und dem dünneren Bereich nahe dem Sicherungsende entspricht dem Durchmesser der Montagebohrungen 9 des Messerelements 6, der Bolzen weist somit einen dünneren Abschnitt im Bereich des Sicherungsendes und einen dickeren Abschnitt im Bereich des Betonmahlendes auf, wobei der Übergang zwischen dünnerem und dickerem Abschnitt als Schulter 26 ausgebildet ist, die in einer Querebene zur Bolzenachse liegt.

Das in die Aufnahmeausnehmung 13 eingeschobene Messerelement 6 wird von den Bolzen 12 nur gegen Verschieben parallel zur Auflageebene am Zangen backen gesichert. Der Großteil der an den Schneideteilen 7 aufgenommenen Kräfte wird durch die formschlüssige Verbindung an den ersten Zangenbacken 1 weitergegeben. Auch die an den Betonmahlzähnen auftretenden Kräfte werden zu einem großen Teil über die Schultern 26 der Bolzen 12 direkt an den ersten Zangenbacken 19 weitergegeben.

Die Anordnung ermöglicht ein besonders schnelles Auswechseln des Messerelements und der Bolzen. Weiters ist nahezu die gesamte Aufnahmeausnehmung vom Messerelement 6 abgedeckt und somit vor Beschädigungen durch Abbruchmaterial geschützt.

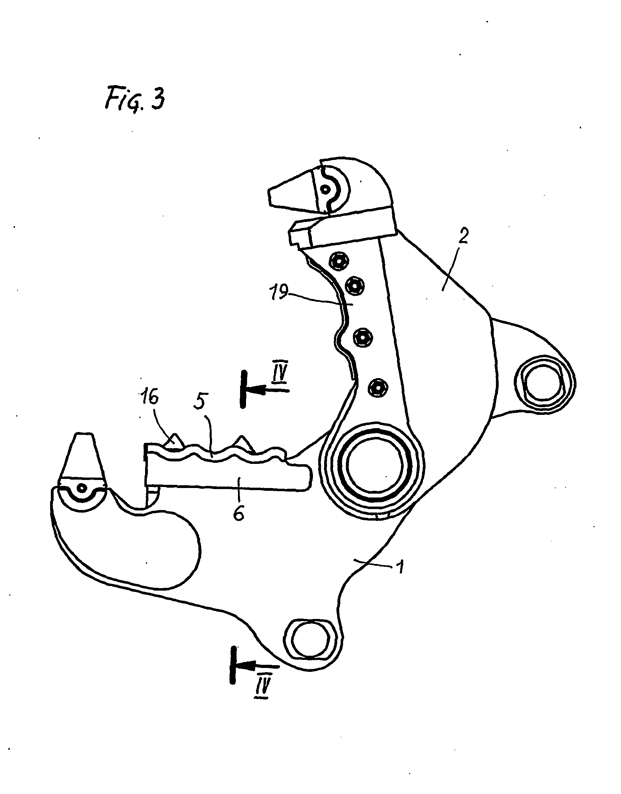

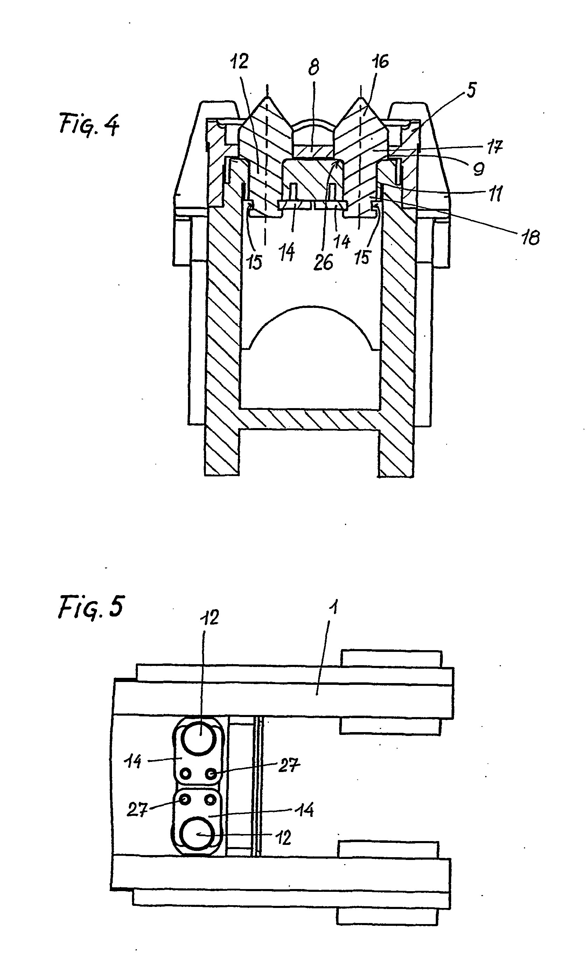

Figur 3 zeigt die Abbruchzange in zusammengebauter Anordnung in einer Seitenansicht, wobei gut zu erkennen ist, wie die Betonmahlzähne 16 über die Schneideteile 5 des Messerelements 6 hinausragen um Betonreste nochmals zu zerkleinern, bevor sie die Schneideteile 5 beschädigen können. Der in Figur 3 angedeutete Schnitt IV-IV ist in Figur 4 dargestellt.

Die Schneideteile 19 des zweiten Zangenbackens 2 sind in herkömmlicher Weise mittels Schraubverbindungen an dem Zangenbacken 2 befestigt. Sowohl die Schneideteile 5 auf dem Messerelement 6 als auch die Schneideteile 19 auf dem zweiten Zangenbacken 2 weisen eine wellenförmige Schneide auf. Diese dient dazu, die Metallteile beim Schneidevorgang vor dem Durchtrennen gegen ein Herausrutschen aus dem Schneidebereich zu sichern.

Figur 4 zeigt in einer Schnittansicht, wie die als Betonmahlzähne 16 ausgebildeten Bolzen 12 das Messerelement 6 in seiner Befestigung gegen den Zangenbacken 1 sichern. Die Bolzen werden in die aufeinander ausgerichteten Montagebohrungen 9 und 11 des Messerelements 6 und des ersten Zangenbackens 1 von oben so weit eingesteckt, dass die Schulter 26, die den dickeren von dem dünneren Bolzenbereich abgrenzt, auf der Oberfläche des Zangenbackens 1 aufliegt. Die Bolzen sind somit mit ihrem dünneren Bereich in der Montagebohrung 11 des Zangenbackens 1 und mit ihrem dickeren Bereich in der Montagebohrung 9 des Messerelements 6 eingepasst, wobei die im Bereich der Betonbrechseite der Bolzen ausgebildeten Betonbrechzähne 16 über die Oberfläche des Verbindungssteges 8 und auch über die am Messerelement 6 angeordneten Schneideteile 5 hinausragen.

Mit dieser Anordnung wird gewährleistet, dass ein Großteil der auf die Betonbrechenden der Bolzen einwirkenden Kräfte über die aufliegenden Schultern 26 an den Zangenbacken weitergegeben werden und die Bolzen 12 Biege- und Scherbeanspruchungen nur in geringerem Maße aufnehmen müssen. Die Kräfte, die von dem Verbindungssteg 8 des Messerelements 6 auf die Bolzen einwirken, werden durch die größeren Montagebohrungen auf einen größeren Bereich verteilt und wirken auf den dickeren Teil des Bolzens. Auch dabei ist für eine besonders günstige Form der Weitergabe der auf das Messerelement 6 wirkenden Kräfte gesorgt.

Um die Bolzen 12 gegen ein Herausfallen zu sichern sind an dem Sicherungsende der Bolzen Sicherungsplatten 14 angeordnet, die, etwa durch eine Schraubenverbindung, an dem Zangenbacken 1 befestigt sind und mit den Randbegrenzungen einer U-förmigen Ausnehmung mit der Ringnut 15 des Bolzens im Eingriff sind, und so den Bolzen in Richtung seiner Längsachse fixieren.

Die Seitenteile 7 des Messerelements 6 sind in ihrem unteren Bereich formschlüssig auf der Aufnahmeausnehmung 13 des Zangenbackens 1 angeordnet. Dabei wird das Messerelement 6 durch die Seitenfläche 30 des Zangenbackens 1 in seitlicher Richtung fixiert. Das Messerelement 6 liegt weiters mit der Unterseite seiner Seitenteile 7 auf der Stirnfläche 29 der Aufnahmeausnehmung 13 des Zangenbackens auf. Über diese Verbindung wird ein Großteil der Schnittkräfte von den Schneideteilen 5 über die Seitenteile 7 direkt an den Zangenbacken übertragen.

In Figur 5 sind die Sicherungselemente 14 nochmals in einer Unteransicht dargestellt. Die Sicherungselemente 14 werden mit einer U-Förmigen Aufnahmeausnehmung von der Seite auf die Ringnut 15 der Bolzen 12 aufgeschoben, und mit Schrauben 27 an dem Zangenbacken 1 befestigt. Durch die Anordnung an der der "Arbeitsseite" des Zangenbackens abgewandten Seite sind die Sicherungselemente der Bolzensicherung weitgehend von Beschädigungen durch Abbruchmaterial geschützt. Dennoch können für einen Wechsel der Bolzen und/oder des Messerelements 6 die Sicherungselemente leicht gelöst und wieder befestigt werden.

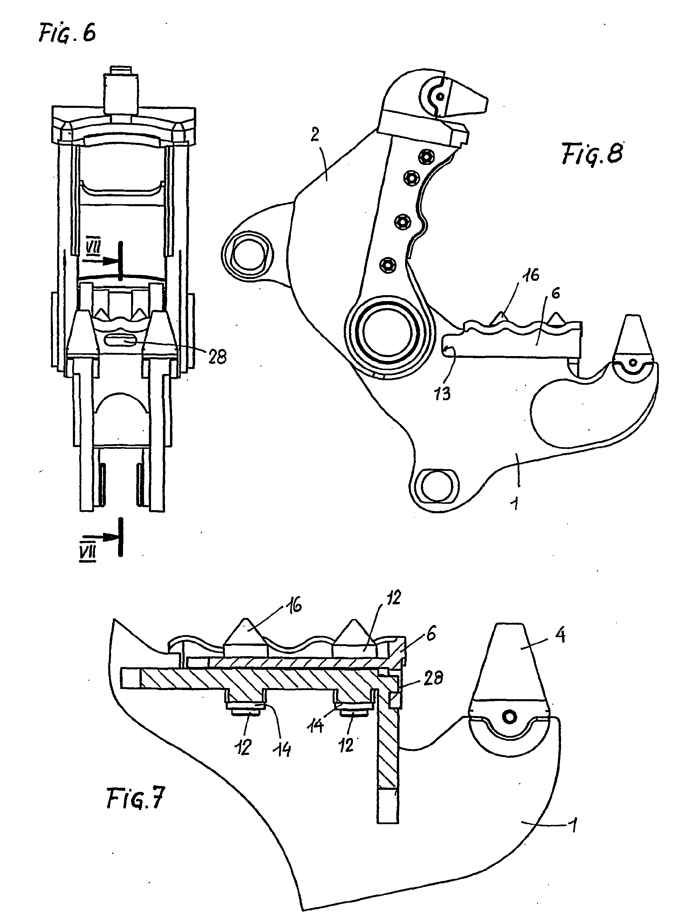

Figur 6 zeigt die geöffnete Abbruchzange in zwei Rissen in einer Vorder- und einer Seitenansicht. Der in der Vorderansicht angedeutete Schnitt ist in Figur 7 dargestellt. Mit Bezug auf die Figuren 6 und 7 soll nun die Vorgehensweise beim Auswechseln des Messerelements 6 beschrieben werden.

Wie in Figur 6 erkennbar ist, befinden sich auf der Seite, von der das Messerelement 6 auf die Aufnahmeausnehmung 13 des Zangenbackens 1 aufgeschoben wird, vor dem Messerelement 6 noch die Brechzähne 4. Daher kann das Messerelement nur ein kleines Stück aus der Aufnahmeausnehmung gezogen werden, bis es an den Brechzähnen anstößt. Um ein Auswechseln des Messerelements 6 zu ermöglichen, ohne dass die Brechzähnen 4 vorerst entfernt werden müssten, wird das Messerelement im vorderen Bereich durch eine Einhakverbindung 28 gehalten und im hinteren Bereich durch die Aufnahmeausnehmung 13 gegen ein Abheben gesichert.

Im Einsatz ist das Messerelement 6 durch die Bolzen gegen ein Verschieben gesichert. Beim Auswechseln des Messerelements werden zuerst die Schrauben der Sicherungsplatten 14 gelöst, die Sicherungsplatten von der Ringnut 15 abgezogen und die Bolzen 12 aus den Montagebohrungen 9 und 11 herausgezogen. Jetzt kann das Messerelement ein Stück in Richtung der Brechzähne 4 aus der Aufnahmeausnehmung 13 herausgezogen werden, wobei auch die Einhakverbindung 28 gelöst wird. Sobald der hintere Teil des Messerelements von der Aufnahmeausnehmung 13 freigekommen ist, kann das Messerelement 6 abgehoben und entfernt werden.

In analoger Weise kann nun ein anderes Messerelement befestigt werden indem es auf den Zangenbacken aufgesetzt und auf die Aufnahmeausnehmung 13 aufgeschoben wird, wobei die Einhakverbindung 28 in Eingriff gebracht wird. Dadurch ist das Messerelement gegen ein Abheben gesichert und kann nun durch die Bolzen auch gegen ein Verschieben gesichert werden, wodurch das Messerelement vollständig festgelegt ist.

Die vorliegende Erfindung ermöglicht somit kurze Stehzeiten, da alle Verschleißteile schnell und einfach ausgewechselt werden können. Durch das Auswechseln des Messerteils kann am Einsatzort weitergearbeitet werden, während die besonders beanspruchten Schneideteile des Messerelements beispielsweise in einer Werkstatt geschliffen oder bearbeitet werden können.

## Patentansprüche

1. Abbruchzange (10) welche einen ersten (1) und einen zweiten (2) Zangenbacken aufweist, die über ein Gelenk (3) schwenkbar miteinander verbunden sind, wobei die Abbruchzange auf beiden Zangenbacken an deren einander zugewandten Seiten jeweils mehrere Brechzähne (4), zum Brechen von Abbruchmaterial, zum Beispiel Beton, Mauerwerk oder dergleichen, und beim Schließen der Zange ineinandergreifende Schneideteile (5, 19) zum Schneiden von Beton-Armierungen, Holz, etc. aufweist, wobei die Schneideteile (5, 19), austauschbar, an den Zangenbacken angebracht sind, wobei die Schneideteile (5) des einen Zangenbackens (1) auf einem Messerelement (6) angeordnet sind, **dadurch gekennzeichnet, dass** das Messerelement jeweils mit Schneiden versehene zum Gegenbacken (2) vorragende Seitenteile (7) sowie einen Verbindungssteg (8) aufweist, wobei das Messerelement in einer an dem einen Zangenbacken vorgesehenen Aufnahmeausnehmung (13) formschlüssig einsetzbar ist, und das Messerelement in dem Verbindungssteg Montagedurchgangsöffnungen (9) aufweist, die mit Montagedurchgangsöffnungen (11), die im Bereich der Aufnahmeausnehmung der einen Zangenbacke (1) vorgesehenen sind, einen gemeinsamen Durchlass bilden, und wobei mehrere Bolzen (12) zur Lagesicherung des Messerelements in den Montagedurchgangsöffnungen eingefügt sind, wobei die Bolzen mit ihren freien Enden Betonmahlzähne (16) bilden, und um Ihre Längsachse drehbar festgelegt sind.

2. Abbruchzange nach Anspruch 1, **dadurch gekennzeichnet, dass** die Bolzen durch in den der Spitze gegenüberliegenden Bolzenbereich eingreifende Sicherungselemente (14) gegen ein Herausfallen aus dem Zangenbacken sicherbar sind.

3. Abbruchzange nach Anspruch 2, **dadurch gekennzeichnet, dass** die Sicherungselemente durch am Zangenbacken lösbar befestigbare Sicherungsplatten (14) gebildet sind, die je Bolzen mit den Randbereichen einer vorzugsweise U-förmigen Ausnehmung mit einer im unteren Bolzenbereich vorgesehenen Ringnut (15) im Eingriff sind.

4. Abbruchzange nach einem der Ansprüche 1 bis 3, **dadurch gekennzeichnet, dass** die Montagedurchgangsöffnungen als Bohrungen ausgebildet sind.

5. Abbruchzange nach Anspruch 4, **dadurch gekennzeichnet, dass** die Montagebohrungen in dem Verbindungssteg des Messerteils einen größeren Durchmesser aufweisen, als die entsprechenden Montagebohrungen in der Zangenbacke und die Montagebohrungen in dem Verbindungssteg zu den entsprechenden Montagebohrungen in der Zangenbacke koaxial sind.

6. Abbruchzange nach Anspruch 4 oder 5, **dadurch gekennzeichnet, dass** die Bolzen in einem nahe der Spitze liegendem Bolzenbereich (17) einen Durchmesser aufweisen, der dem Durchmesser der Montagebohrungen des Messerteils entspricht und in einem der Spitze gegenüberliegenden Bolzenbereich (18) einen Durchmesser aufweisen, der dem Durchmesser der Montagebohrungen des Zangenbackens entspricht.

7. Abbruchzange nach einem der Ansprüche 1 bis 8, **dadurch gekennzeichnet, dass** der Übergang zwischen Bolzenteilen unterschiedlichen Durchmessers als quer zur Bolzenachse verlaufende Schulter (26) ausgebildet ist, welche eine Abstützfläche für die Betonmahlzähne (16) bildet.

## Claims

1. A demolition gripper (10), which has first (1) and second (2) gripper jaws, which are pivotally connected together by means of a joint (3), wherein on the sides directed towards one another of the two gripper jaws the demolition gripper has a plurality of crushing teeth (4) for crushing demolition material, for instance concrete, masonry or the like, and has cutting members (5, 19), which engage into one another when the gripper is closed for cutting concrete reinforcement, wood etc., wherein the cutting members (5, 19) are replaceably attached to the gripper jaws, wherein the cutting members (5) on the one gripper jaw (1) are arranged on a blade element (6), **characterised in that** the blade element is provided with side members (7), which project towards the opposing jaw (2) and are each provided with blades and a connecting web (8), wherein the blade element is insertable in a positively locked manner in a receiving recess (13) provided on the one gripper jaw and the blade element has assembly openings (9) in the connecting web, which, together with assembly openings (11), which are provided in the region of the receiving recess in the one gripper jaw (1), form a common passage and wherein a plurality of pegs (12) for positionally securing the blade element are inserted into the assembly openings, wherein the pegs constitute concrete grinding teeth (16) with their free ends and are rotationally fixed in position about their longitudinal axis.

2. A demolition gripper as claimed in claim 1, **characterised in that** the pegs are securable against falling out of the gripper jaws by securing elements engaging into the peg region opposite to the tip.

3. A demolition gripper as claimed in claim 2, **characterised in that** the securing elements are constituted by securing plates (14), which are releasably fastenable to the gripper jaws and the pegs are in engagement with the edge regions of a preferably U shaped recess with an annular groove (15) provided in the lower peg region.

4. A demolition gripper as claimed in one of claims 1 to 3, **characterised in that** the assembly openings are in the form of bores.

5. A demolition gripper as claimed in claim 4, **characterised in that** the assembly bores in the connecting web of the blade element have a larger diameter than the corresponding assembly bores in the gripper jaw and the assembly bores in the connecting web are coaxial with the corresponding assembly bores in the gripper jaw.

6. A demolition gripper as claimed in claim 4 or 5, **characterised in that** the pegs have a diameter in a peg region (17) situated close to the tip which corresponds to the diameter of the assembly bores in the blade member and in a peg region (18) opposite to the tip have a diameter which corresponds to the diameter of the assembly bores in the gripper jaw.

7. An assembly gripper as claimed in one of claims 1 to 8, **characterised in that** the transition between the peg portions of different diameter is in the form of a shoulder (26) extending transverse to the peg axis, which constitutes a support surface for the concrete grinding teeth (16).

## Revendications

1. Pince de démolition (10) qui présente un premier (1) et un second (2) becs de pince reliés entre eux de manière pivotante par une articulation (3), la pince de démolition présentant sur les deux becs de pince selon leurs côtés tournés l'un vers l'autre respectivement plusieurs dents de broyage (4) pour le broyage de matériau de démolition par exemple de béton, de maçonnerie ou similaire, et des parties de coupe (5, 19) s'engageant l'une dans l'autre lors de la fermeture de la pince pour la coupe d'armatures en béton, en bois, etc., les parties de coupe (5, 19) étant montées de manière interchangeable sur les becs de pince, les parties de coupe (5) du premier des becs de pince (1) étant disposées sur un élément de lame (6), **caractérisée en ce que** l'élément de lame présente respectivement des parties latérales (7) dépassant vers le bec antagoniste (2), pourvues de tranchants, ainsi qu'une entretoise de liaison (8), l'élément de lame pouvant être inséré à complémentarité de formes dans un évidement de réception (13) prévu sur le premier des becs de pince, et l'élément de lame présentant dans l'entretoise de liaison des ouvertures traversantes de montage (9) qui forment un passage commun avec des ouvertures traversantes de montage (11) qui sont prévues dans la zone de l'évidement de réception du premier des becs de pince (1), et plusieurs boulons (12) étant insérés dans les ouvertures traversantes de montage pour fixer la position de l'élément de lame, les boulons formant avec leurs extrémités libres des dents de broyage de béton (16) et étant fixés de manière à pouvoir tourner autour de leur axe longitudinal.

2. Pince de démolition selon la revendication 1, **caractérisée en ce que** les boulons peuvent être fixés par des éléments de fixation (14) s'engageant dans la zone de boulon opposée à la pointe pour éviter une chute du bec de pince.

3. Pince de démolition selon la revendication 2, **caractérisée en ce que** les éléments de fixation sont formés par des plaques de fixation (14) pouvant être fixées de manière amovible sur le bec de pince, lesquelles plaques s'engageant sur le boulon selon les zones de bord d'un évidement de préférence en U dans une rainure annulaire (15) prévue dans la zone inférieure de boulon.

4. Pince de démolition selon l'une quelconque des revendications 1 à 3, **caractérisée en ce que** les ouvertures traversantes de montage sont réalisées sous forme de perçages.

5. Pince de démolition selon la revendication 4, **caractérisée en ce que** les perçages de montage présentent dans l'entretoise de liaison de la partie de lame un plus grand diamètre que les perçages de montage correspondants dans le bec de pince, et les perçages de montage dans l'entretoise de liaison sont coaxiaux aux perçages de montage correspondants dans le bec de pince.

6. Pince de démolition selon la revendication 4 ou 5, **caractérisée en ce que** les boulons présentent, dans une zone de boulon (17) se trouvant près de la pointe, un diamètre qui correspond au diamètre des perçages de montage de la partie de lame et présentent un diamètre dans une zone de boulon (18) opposée à la pointe qui correspond au diamètre des perçages de montage du bec de pince.

7. Pince de démolition selon l'une quelconque des revendications 1 à 8, **caractérisée en ce que** le passage entre des parties de boulon de différents diamètres est réalisé sous forme d'un épaulement (26) s'étendant transversalement à l'axe de boulon et qui forme une surface d'appui pour les dents de broyage de béton (16).
